# EUROPÄISCHE PATENTSCHRIFT

(11) **EP 0 744 010 B1**
(45) Veröffentlichungstag und Bekanntmachung des Hinweises auf die Patenterteilung: **29.09.1999**
(21) Anmeldenummer: 95936953.9
(22) Anmeldetag: 24.11.1995
(51) Int. Cl.: F23D 14/78, F23D 14/74

(54) **HEIZGERÄT**
HEATER
DISPOSITIF DE CHAUFFAGE

(30) Priorität: 20.12.1994 DE 4445461
(43) Veröffentlichungstag der Anmeldung: 27.11.1996
(73) Patentinhaber: ROBERT BOSCH GMBH, 70442 Stuttgart (DE)
(72) Erfinder: DANIEL, Walter, D-71065 Sindelfingen (DE); LEHR, Walter, D-70469 Stuttgart (DE)
(86) Internationale Anmeldenummer: DE9501634
(87) Internationale Veröffentlichungsnummer: WO9619697

(56) Entgegenhaltungen:
- EP-A- 0 599 395
- EP-A- 0 660 040
- WO-A-87/03068
- PATENT ABSTRACTS OF JAPAN vol. 009 no. 034 (M-357) ,14.Februar 1985 & JP,A,59 176508 (MATSUSHITA DENKI SANGYO KK) 5.Oktober 1984,
- PATENT ABSTRACTS OF JAPAN vol. 009 no. 158 (M-393) ,3.Juli 1985 & JP,A,60 033412 (OSAKA GAS KK) 20.Februar 1985,

## Beschreibung

### Stand der Technik

Die Erfindung geht aus von einem Heizgerät nach der Gattung des Hauptanspruchs. Bei einem Heizgerät, wie es in der internationalen Patentanmeldung WO 96/05470, die Stand der Technik nach Artikel 54(3) EPÜ darstellt, beschrieben ist, stellt sich eine stabile Flamme im Abstand vom Brennerkopf ein, welcher durch die Brennkammerwand großflächig Energie entzogen wird, wodurch die Flammentemperatur abgesenkt und die NOₓ-Bildung verringert wird. Mit abnehmender Brennerbelastung zieht sich jedoch die Flamme zunehmend gegen den Brennerkopf hin zurück, so daß die Kühlwirkung der Brennkammerwand nachläßt und der NOₓ-Gehalt der Verbrennungsgase ansteigt.

### Vorteile der Erfindung

Die erfindungsgemäße Anordnung mit den Merkmalen des Hauptanspruchs hat den Vorteil, daß mit abnehmender Belastung des Brenners und zunehmender Annäherung der Flamme an den Brennerkopf diese zunehmend durch das wärmeabführende Medium im Leitungssystem des Brennerkopfes gekühlt wird und dadurch einer schädlichen NOₓ-Bildung auch im unteren Leistungsbereich des Brenners entgegengewirkt wird. Durch die Kombination der Maßnahmen gemäß der WO 96/05470 und der vorliegenden Erfindung ergibt sich über einen erweiterten Leistungsregelbereich des Brenners eine weiter verminderte NOₓ-Emission.

Durch die in den Unteransprüchen aufgeführten Maßnahmen sind vorteilhafte Weiterbildungen der Anordnung nach dem Hauptanspruch möglich.

Durch Verringerung der Gemischmenge kann der Regelbereich des Brenners in Richtung kleinerer Leistung so erweitert werden, daß die Flammenwurzeln am Brennerkopf haften und die Kühlung im wesentlichen allein von diesem her erfolgt. Die Kühlung ist besonders wirkungsvoll, wenn der Außenwandbereich des Brennerkopfes an dessen Ausströmöffnungen derart strukturiert ausgebildet ist, daß sich zwischen am Brennerkopf anliegenden Flammenwurzeln und den Mündungsrändern der Ausströmöffnungen definierte Berührungsflächen ergeben, die sich über die Scheitelbereiche der Flammenwurzeln hinweg auch gegen beziehungsweise in deren Seitenbereiche hinein erstrecken. Dadurch wird es auch möglich, das Heizgerät mit einer geringeren Teillast zu betreiben, als es ohne die Anwendung dieser zusätzlichen Maßnahme möglich wäre, weil in dem relativ kleinen Brennerkopf bei kleinen Leistungen noch eine stabile Flamme bei optimalen Kühlbedingungen brennt.

Bei Heizgeräten mit einem Brennerkopf, dessen Ausströmöffnungen zwischen einzelnen, sich im Abstand parallel zueinander erstreckenden dünnwandigen Leitkörpern gebildet sind, ergibt sich eine einfache und in Bezug auf die Flammenkühlung sehr wirksame Ausführung, wenn ein Teil der Leitkörper, vorzugsweise jeder zweite oder dritte Leitkörper, in Ausströmrichtung des Brennstoff-Luftgemisches gesehen länger als die benachbarten Leitkörper ausgebildet ist. Bei dieser Anordnung bilden die weiter in die Brennkammer hineinreichenden, längeren Leitkörper zwischen sich Halteräume für die Flammenwurzeln, welche an den vorstehenden Wandflächen der längeren Leitkörper seitlich anliegen und über diese optimal gekühlt werden.

Die die Ausströmöffnungen begrenzenden Leitkörper des Brennerkopfes werden vorteilhaft unmittelbar wärmeleitend mit dem vom Kühlmedium durchströmten Leitungssystem verbunden.

Anstelle dieser bevorzugten Ausführungen des Brennerkopfes kann die für eine gute Wärmeabfuhr vorgesehene Strukturierung der Brennerkopfwand auch durch andere Mittel erreicht werden, zum Beispiel durch eine Wabenstruktur der Wand mit ungleichlangen Einzelwaben, oder durch die Anordnung von ungleichlangen Stiften, die neben den Ausströmöffnungen aus der Brennerkopfwand herausragen.

Das erfindungsgemäße Heizgerät kann bevorzugt in Wassererhitzern eingesetzt werden. In diesem Fall kann das wärmeabführende Medium im Leitungssystem des Brennerkopfes und gegebenenfalls im Kühlmantel der Brennkammer und im Abgaswärmetauscher das vom Gerät zu erhitzende Wasser sein.

### Zeichnung

Zwei Ausführungsbeispiele der Erfindung sind in der Zeichnung schematisch dargestellt und in der nachfolgenden Beschreibung näher erläutert. Die Figuren 1 und 2 zeigen je ein Schnittbild des ersten und des zweiten Ausführungsbeispiels. Im Schaubild nach Figur 3 ist die Abhängigkeit der NOₓ-Emission von der Brennerbelastung für eine Ausführung nach der WO 96/05470 eine Ausführung nach der vorliegenden Erfindung dargestellt.

### Beschreibung der Ausführungsbeispiele

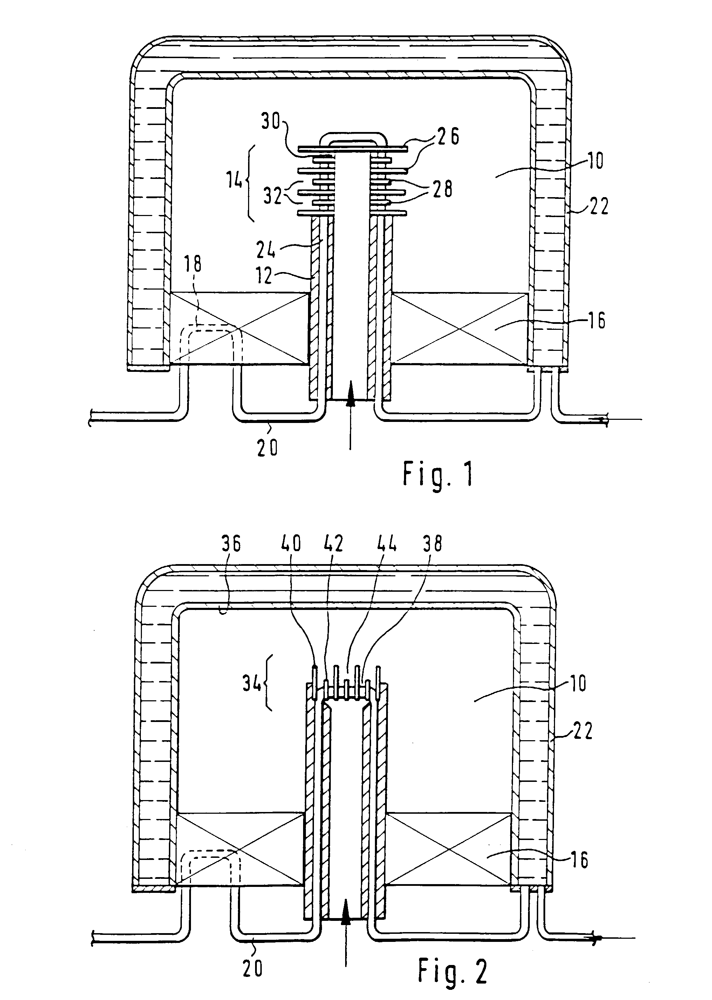

Das Heizgerät nach Figur 1 hat eine zylindrische Brennkammer 10, die oben geschlossen ist und in die zentral ein Brennerrohr 12 mit einem angesetzten Brennerkopf 14 hineinragt. In den Öffnungsrand der Brennkammer 10 ist ein Abgaswärmetauscher 16 eingesetzt, durch den ein symbolisch angedeuteter Leitungsabschnitt 18 eines vom zu erhitzenden Wasser durchströmten Leitungssystems 20 hindurchführt. Die Brennkammer 10 ist von einem Kühlmantel 22 umgeben, dessen Wasserinhalt an das Leitungssystem 20 angeschlossen ist.

Das Leitungssystem 20 hat einen Leitungsabschnitt 24, der in das Brennerrohr 12 und den Brennerkopf 14 integriert ist. Der Brennerkopf 14 ist aus zwei Gruppen von im Durchmesser unterschiedlich bemessenen Ringscheiben 26, 28 gebildet, die im Wechsel mit - zur Deutlichkeit vergröbert dargestelltem - axialem Abstand übereinander angeordnet sind. Die Ringscheiben 26, 28 sind gehalten und gut wärmeleitend verbunden mit dem Leitungsabschnitt 24, der über das Brennerrohr 12 vorstehend sich über die ganze Höhe des Brennerkopfes 14 erstreckt.

Die Ringscheiben 26, 28 bilden zwischen sich die Ausströmöffnungen 30 für das Brennstoff-Luftgemisch, das unter Gebläsedruck von unten in das Brennerrohr 12 einströmt. Durch die gestaffelte Anordnung der Ringscheiben 26, 28 ergeben sich jeweils zwischen zwei größeren Ringscheiben 26 vertiefte Ringräume 32 im Außenwandbereich des Brennerkopfes 14, die dessen durch die äußeren Ringkanten der Ringscheiben 26 definierte Mantelfläche stark strukturieren. Die inneren Ringkanten der Ringscheiben 26, 28 liegen gemeinsam auf einer gedachten Mantelfläche, die sich koaxial und mit gleichem Durchmesser an die Innenbohrung des Brennerrohres 12 anschließt.

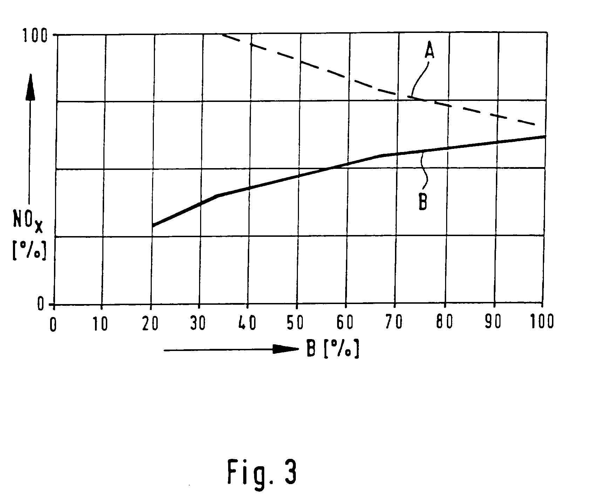

Das beschriebene Heizgerät ist so ausgelegt, daß sich im mittleren und oberen Leistungsbereich gemäß der WO 96/05470 eine stabile Flamme im Abstand vom Brennerkopf 14 bis nahe an die Wand der Brennkammer 10 erstreckt. Dabei entzieht die Brennkammerwand der Flamme großflächig Energie, wodurch ein Absinken der Flammentemperatur und der NOₓ-Bildung wirkungsvoll erreicht ist. Die Kühlwirkung der Brennkammerwand ist umso größer und die NOₓ-Bildung umso geringer, je höher die Brennerbelastung beziehungsweise die Ausströmgeschwindigkeit des Brennstoff-Luftgemisches aus dem Brennerkopf 14 ist. Dieses Verhalten ist durch die gestrichelte Linie A im Schaubild nach Figur 3 dargestellt, in welchem die NOₓ-Emission über der Brennerbelastung B aufgetragen ist.

Durch die zusätzliche Maßnahme der Kühlung des Brennerkopfes 14 ist erreicht, daß mit abnehmender Brennerbelastung und zunehmender Annäherung der Flamme an den Brennerkopf 14 der Anstieg der NOₓ-Emissionen infolge nachlassender Kühlung durch die Brennkammerwand abgeschwächt beziehungsweise überkompensiert wird. Das wird durch die in Figur 3 voll ausgezogene Linie B verdeutlicht, die den Funktionsverlauf bei kombinierter Anwendung der Maßnahmen nach der WO 96/05470 und nach der vorliegenden Erfindung zeigt. Wenn im unteren Leistungsbereich des Brenners die Flammenwurzeln in Berührung mit dem Brennerkopf 14 bleiben, wirkt sich die zusätzliche Maßnahme der Brennerkopfkühlung in Verbindung mit der strukturierten Ausbildung der Brennerkopfwand besonders aus, wie der in diesem Bereich stärker abfallende Abschnitt der Linie B zeigt. In diesem Bereich werden die Flammenwurzeln in den Ringräumen 32 gehalten und von den sie berührenden Seitenflächen der überstehenden Ringscheiben 26 auch an den Wurzelseiten gekühlt.

Das Heizgerät nach Figur 2 unterscheidet sich von der vorbeschriebenen Ausführung im wesentlichen dadurch, daß ein Brennerkopf 34 mit gegen den Boden 36 der Brennkammer 10 gerichteten Ausströmöffnungen 38 versehen ist. Diese sind wiederum zwischen ungleichlangen Leitkörpern 40, 42 gebildet, wobei sich zwischen den längeren Leitkörpern 40 liegenden Räume 44 zur Aufnahme der Flammenwurzeln im unteren Leistungsbereich des Brenners ergeben. Die Leitkörper 40, 42 können als ebene Blechscheiben oder als konzentrisch zur Achse des Heizgerätes angeordnete Ringkörper ausgebildet sein.

## Patentansprüche

1. Heizgerät mit einem in einer Brennkammer (10) angeordneten Brennerkopf (14, 34), dem ein Brennstoff-Luftgemisch unter Gebläsedruck zugeführt ist, welcher so einstellbar ist, daß die Ausströmgeschwindigkeit des Brennstoff-Luftgemisches aus dem Brennerkopf (14, 34) dessen Flammgeschwindigkeit übersteigt und sich eine stabile Flamme im Abstand vom Brennerkopf (14, 34) bis nahe an die Brennkammerwand ausbildet, wobei im Brennerkopf (14, 34) ein Leitungsabschnitt (24) eines Leitungssystems (20) integriert ist, das von einem wärmeabführenden Kühlmedium durchströmt ist.

2. Heizgerät nach Anspruch 1, dadurch gekennzeichnet, daß der Außenwandbereich des Brennerkopfes (14, 34) an dessen Ausströmöffnungen (30, 38) derart strukturiert ausgebildet ist, daß sich bei einem Betrieb des Heizgeräts im unteren Leistungsbereich zwischen am Brennerkopf anliegenden Flammenwurzeln und den Mündungsrändern der Ausströmöffnungen (30, 38) definierte Berührungsflächen ergeben, die sich über die Scheitelbereiche der Flammenwurzeln hinweg auch gegen beziehungsweise in deren Seitenbereiche hineinerstrecken.

3. Heizkörper nach Anspruch 2, mit einem Brennerkopf, dessen Ausströmöffnungen zwischen einzelnen, sich im Abstand zueinander erstreckenden, dünnwandigen Leitkörpern gebildet sind, dadurch gekennzeichnet, daß ein Teil der Leitkörper (26, 40), vorzugsweise jeder zweite oder dritte Leitkörper, in Ausströmrichtung des Brennstoff-Luftgemisches gesehen länger als die benachbarten Leitkörper (28, 42) ausgebildet ist.

4. Heizgerät nach Anspruch 3, dadurch gekennzeichnet, daß die die Ausströmöffnungen (30, 38) begrenzenden Leitkörper (26, 28, 40, 42) des Brennerkopfes (14, 34) wärmeleitend mit dem vom Kühlmedium durchströmten Leitungssystem (20) verbunden sind.

5. Heizgerät nach einem der vorhergehenden Ansprüche, dessen Brennkammer von einem Kühlmantel umgeben ist, durch den ein Kühlmedium strömt, dadurch gekennzeichnet, daß das den Brennerkopf (14, 34) kühlende Leitungssystem (20) mit dem Kühlmantel (22) der Brennkammer (10) verbunden ist.

6. Heizgerät nach einem der vorhergehenden Ansprüche, mit einem Abgaswärmetauscher, der in einem von einem Kühlmedium durchströmten Leitungssystem liegt, dadurch gekennzeichnet, daß das den Brennerkopf (14, 34) kühlende Leitungssystem (20) auch durch den Abgaswärmetauscher (16) hindurchgeführt ist.

## Claims

1. Heater with a burner head (14, 34) which is arranged in a combustion chamber (10) and to which a fuel/air mixture is supplied under blast pressure which can be set in such a way that the outflow velocity of the fuel/air mixture from the burner head (14, 34) exceeds the flame velocity of the said mixture and a stable flame is formed at a distance from the burner head (14, 34) as far as near the combustion-chamber wall, there being integrated in the burner head (14, 34) a conduit portion (24) of a conduit system (20), through which a heat-dissipating cooling medium flows.

2. Heater according to Claim 1, characterized in that the outer wall region of the burner head (14, 34) is structured at its outflow orifices (30, 38) in such a way that, when the heater is operated in the lower power range, defined contact surfaces occur between flame roots adjacent to the burner head and the mouth edges of the outflow orifices (30, 38), the said contact surfaces also extending beyond the crest regions of the flame roots towards or into the side regions of the latter.

3. Heater according to Claim 2, with a burner head, the outflow orifices of which are formed between individual thin-walled guide bodies extending at a distance from one another, characterized in that some of the guide bodies (26, 40), preferably every second or third guide body, are designed to be longer than the adjacent guide bodies (28, 42), as seen in the outflow direction of the fuel/air mixture.

4. Heater according to Claim 3, characterized in that the guide bodies (26, 28, 40, 42) of the burner head (14, 34), which delimit the outflow orifices (30, 38), are heat-conductively connected to the conduit system (20) through which the cooling medium flows.

5. Heater according to one of the preceding claims, the combustion chamber of which is surrounded by a cooling jacket, through which a cooling medium flows, characterized in that the conduit system (20) cooling the burner head (14, 34) is connected to the cooling jacket (22) of the combustion chamber (10).

6. Heater according to one of the preceding claims, with an exhaust-gas heat exchanger which is located in a conduit system through which a cooling medium flows, characterized in that the conduit system (20) cooling the burner head (14, 34) is also led through the exhaust-gas heat exchanger (16).

## Revendications

1. Dispositif de chauffage comportant une tête de brûleur (14, 34) logée dans une chambre de combustion (10), recevant un mélange carburant/air sous la pression d'une machine soufflante, cette pression étant réglable pour que la vitesse de sortie du mélange carburant/air de la tête de brûleur (14, 34) dépasse sa vitesse de flamme et développe une flamme stable à une certaine distance de la tête de brûleur (14, 34) jusqu'à proximité de la paroi de la chambre de combustion, un segment de conduite (24) d'un système de conduite (20) étant intégré dans la tête de brûleur (14, 34), ce segment de conduite étant traversé par un fluide de refroidissement évacuant la chaleur.

2. Dispositif de chauffage selon la revendication 1,
caractérisé en ce que
la zone de la paroi extérieure de la tête de brûleur (14, 34) est structurée au niveau de ses orifices de sortie (30, 38) pour que, lorsque le dispositif de chauffage fonctionne dans sa plage de puissance inférieure, on ait des surfaces de contact déterminées entre les bases de la flamme, au niveau de la tête de brûleur, et les bords de l'embouchure des orifices de sortie (30, 38), surfaces de contact qui s'étendent au niveau de la zone du sommet des bases de flammes, contre, leur zone latérale et le cas échéant, dans celle-ci.

3. Dispositif de chauffage selon la revendication 2 comportant une tête de brûleur dont les orifices de sortie sont formés entre différents éléments de guidage à paroi mince, s'étendant à distance les uns des autres,
caractérisé en ce qu'
une partie des éléments de guidage (26, 40), de préférence chaque second ou troisième élément de guidage, est plus long que les éléments de guidage voisins (28, 42), cette longueur étant mesurée dans la direction de sortie du mélange carburant/air.

4. Dispositif de chauffage selon la revendication 3,
caractérisé en ce que
les organes de guidage (26, 28, 40, 42) de la tête de brûleur (14, 34), qui délimitent les orifices de sortie (30, 38), sont reliés en conduction thermique au système de conduite (20) traversé par le fluide de refroidissement.

5. Dispositif selon l'une quelconque des revendications précédentes dont la chambre de combustion est entourée par une enveloppe de refroidissement traversée par un fluide de refroidissement,
caractérisé en ce que
le système de conduite (20), qui refroidit la tête de brûleur (14, 34), est relié à l'enveloppe de refroidissement (22) de la chambre de combustion (10).

6. Dispositif selon l'une quelconque des revendications précédentes comportant un échangeur de chaleur des gaz d'échappement situé dans le système de conduite traversé par un fluide de refroidissement,
caractérisé en ce que
le système de conduite (20), refroidissant la tête de brûleur (14, 34), passe également par l'échangeur de chaleur des gaz d'échappement (16).
